**Europäisches Patentamt**

**European Patent Office**

**Office européen des brevets**

(19)

(11) Publication number : **0 399 728 B1**

# (12) EUROPEAN PATENT SPECIFICATION

(45) Date of publication of patent specification :
**18.11.93 Bulletin 93/46**

(51) Int. Cl.⁵ : **F16D 69/02, C10M 125/24, C08J 5/14, C08K 3/32**

(21) Application number : **90305353.6**

(22) Date of filing : **17.05.90**

(54) **Alkali phosphates as anticorrosive agent(s) in friction linings or in solid lubricant combinations therefor.**

(30) Priority : **23.05.89 DE 3916807**

(43) Date of publication of application :
**28.11.90 Bulletin 90/48**

(45) Publication of the grant of the patent :
**18.11.93 Bulletin 93/46**

(84) Designated Contracting States :
**DE DK FR GB IT**

(56) References cited :
**DE-A- 1 062 005**
**DERWENT FILE SUPPLIER, WPIL, Derwent Publications Ltd, London**

(56) References cited :
**DERWENT FILE SUPPLIER WPI, Derwent Publications Ltd, London, GB**
**DERWENT FILE SUPPLIER WPI, Derwent Publications Ltd, London, GB**
**PATENT ABSTRACTS OF JAPAN, vol. 6, no. 3 (C-86)[881], 9th January 1982**

(73) Proprietor : **DOW CORNING GMBH**
**Pelkovenstrasse 152, Postfach 50 01 60**
**D-80971 München (DE)**

(72) Inventor : **Holinski, Rüdiger**
**Leipziger Strasse 101**
**D-8000 München 50 (DE)**

(74) Representative : **Bullows, Michael**
**Dow Corning Limited Cardiff Road**
**Barry South Glamorgan CF6 7YL Wales (GB)**

## Description

The invention concerns the use of alkali phosphates as anti-corrosive agents in friction linings such as in brake linings, clutch linings or in solid lubricant combinations used in such friction linings.

Friction linings are usually based on asbestos fibres, mixtures of asbestos fibres and other heat-resistant, inorganic or organic fibres, asbestos-free mixtures of heat-resistant, inorganic or organic fibres, metal powders such as iron powder, copper powder, brass powder, zinc powder or mixtures thereof or metal powders in combination with steel wool, if necessary with the use of fibres such as graphite fibres or polyaramid fibres and mineral wool. These fibre materials and/or metal powders in combination with an organic, monomeric or polymeric bonding agent, or bonding agent mixture, form the friction lining material. If necessary, such friction linings also contain fillers such as anti-noise and vibration-dampening materials. The binding agent or binding agent mixture present in the given starting mixtures is thermosetting and in the cured state it forms a solid and temperature-resistant matrix for the various components of the friction lining.

Whereas earlier, customary friction linings were based mainly on asbestos, for known health risks with respect to asbestos there is an ever-increasing change taking place to replace the asbestos content in friction linings with other materials. Friction linings containing asbestos as well as asbestos-free friction linings, in addition to the above-indicated components, usually also contain one or several solid lubricants for improving the tribiological properties of such materials such as especially their friction behaviour and wear and tear behaviour.

A friction lining based on metals is known, for example, from German patent 29 24 540.

There are two types of formulations for asbestos-free friction linings, especially brake linings, namely metalloid formulations and fibre-replacement formulations. Both formulations contain metals in the above-indicated form and the fibre replacement linings in addition also contain fibres such as graphite fibres, polyaramid fibres or mineral wool. These fibre-replacement formulations are becoming more and more successful as one disadvantage of metalloid linings is that the metal content may be great enough that the thermal conductivity is too great and too much expense is involved in providing acceptable thermal insulation.

In practical conditions there has turned out to be an additional disadvantage for both types of formulations of asbestos-free materials. Due to the fact that various metals are used in such linings there are different voltage potentials which easily result in corrosion of the surface of the linings. In automobiles the brake linings are normally fitted tightly on the brake disc or brake drum and they also constantly abrade slightly during operation even when the brakes are not activated. Corrosion on the surface of the brake linings has resulted in serious defects. A sticking of the brake linings to the brake discs or brake drums due to the formation of corrosion on the brake linings was observed. Vehicles which had been parked for a weekend could no longer be driven away as the brake linings were stuck to the brake discs or brake drums.

This corrosion of asbestos-free linings is also a problem when transporting new vehicles on ships or on overland transporters (trucks or railway cars). It was observed that when new vehicles were unloaded the brake linings had rusted solidly to the brake discs or brake drums.

Similar problems also occur in asbestos-free friction linings which do not contain any metals and consequently by themselves cannot produce any corrosion. Here, namely because of corrosion of the brake discs or brake drums consisting of metal, the brake linings may also stick to the corroded brake discs or brake drums.

The corrosion of either asbestos-free or metal-containing friction linings in combination with brake discs or brake drums fitted to them and also corroding, or of metal-containing brake discs or brake drums in combination with asbestos-free and non-metal containing friction linings fitted to them, which in and of themselves cannot corrode because of the lack of any metal content, consequently as a whole represents a problem for friction linings. This problem occurs especially in friction linings containing metal since it is manifested here both in the form of corrosion of the metal components of the friction lining and also of the metallic brake discs or brake drums fitted to the latter. Of course this problem is most pronounced in metal-containing brake linings which contain different metals.

Attempts have already been made to solve the above problem by coating new brake linings. However, this measure has the disadvantage that once the brakes have been used the coating is abraded away and consequently the corrosion protection has also been destroyed.

Zinc powder is already known as an anti-corrosion agent which is incorporated into friction linings, but from a surface point of view it is not efficient enough as zinc particles only develop protection against corrosion in their immediate vicinity. Even Borax was subjected to anti-corrosive testing for brake linings according to delivery specification TL-VW 110 of 1985 from Volkswagen Werk AG according to which the release moment of the linings can only be a maximum of 10 Nm (1mkp) and they were found to be good. However, it is not acceptable to use Borax in brake lining mixtures since as a flux it exerts negative effects on the brake disc or brake drums, for example by extracting crystallites at high temperatures.

The standards for an acceptable anti-corrosion agent for friction linings result particularly from the thermal loads to which the friction linings are exposed. A brake lining mixture is used as a dry powder mixture of its components and, as a rule, a phenolic resin is used as binding agent. The powder is compressed in a heatable hydraulic press at elevated temperature, for example about 180°C. After compression the linings are cured according to a programmed temperature profile of up to a maximum temperature of, for example, about 220°C. After curing the linings are ground and for a brief time, for example for 20 seconds at 750°C, they are scorched on the surface. In the friction process during braking temperatures of about 300°C develop, briefly even 600 to 800°C. This means that an anti-corrosive additive has to outlast at least the manufacturing temperature of brake linings of, for example, about 220°C and at least briefly possibly even retain its effectiveness up to about 750°C.

It is an object of the invention to make an anti-corrosive agent available for friction linings, especially friction linings containing metal which retains its corrosion-inhibiting effect even under the indicated temperature conditions.

We have now found that alkali phosphates may be employed as anti-corrosive agents in friction linings, especially in asbestos-free and metal-containing friction linings.

The invention provides in one of its aspects the use of an alkali phosphate as anti-corrosive agent in friction linings or in solid lubricant combinations which are used in friction linings.

The anti-corrosive agent used according to the invention may be mixed in with the finished friction lining mixture or more advantageously with the solid lubricant incorporated into the friction lining, for example a solid lubricant combination known from German Patent 25 14 575 or German Patent 35 13 031 with which it is then jointly introduced into the friction lining mixture.

The amount of alkali phosphate to be used as anti-corrosive agent is generally 0.1 to 6 weight %, preferably 0.5 to 3 weight % and especially 1 to 2 weight % with respect to the total weight of the finished friction lining formulation. Disadvantages may result for the friction properties at concentrations higher than 6 weight %. The maximum of 6 weight % may be necessary in linings with very high metal content whereas, in linings with low metal content or with no metal content whatsoever, a proportion of 0.1 weight % may suffice.

If the anti-corrosive agent used according to the invention is mixed in with a solid lubricant to be incorporated into the friction lining, which is usually a solid lubricant combination, the amount of alkali phosphate in such solid lubricant combination is generally 5 to 50 weight %, preferably 15 to 35 weight % and especially 20 to 30 weight %. In solid lubricant combinations the anti-corrosive agent used according to the invention can be incorporated cleanly, and such combinations may also be introduced easily into friction lining mixtures so that solid lubricant combinations containing the indicated amounts of alkali phosphate represent a preferred embodiment of the invention.

Of the individual alkali phosphates, lithium phosphate, sodium phosphate and potassium phosphate are particularly well suited for use in friction linings containing metal. These products exist first of all in compounds containing water of crystallisation with about 10 to 12 moles of water of crystallisation but they also exist in the calcined form. The version free of water of crystallisation is more suitable, as in the processes applicable for preparing the given friction lining no water of crystallisation can then be released. Moreover a greater anti-corrosive effect can be achieved with a smaller amount of alkali phosphates.

Of the said alkali phosphates it is generally the monophosphates, diphosphates and triphosphates which are effective. However, triphosphates are especially preferred and trisodium phosphate is most preferred. Their water solubility is essential for all applicable alkali phosphates.

These phosphates are suitable for use in friction linings such as brake linings and clutch linings because they are very temperature-stable, namely they survive temperatures of up to 800°C and furthermore they remain effective in brakes during such a high temperature application.

Compounds comprising a brake lining mixture which alone gave corrosion very strongly at 100% relative humidity, and 0.5 to 3 weight % and especially of 1 to 2 weight % of alkali phosphates, gave no corrosion of brake linings and also no sticking of brake linings to brake discs or brake drums.

In addition to surface corrosion effects of brake linings, alkali phosphates also prevent the linings from rusting through. A continuous corrosion from the inside to the outside was also observed, namely without anti-corrosive agent, so that after some time the brake lining loses strength, for example by rusting of the steel wool.

A series of linings has a built-in porosity. Because of increasing corrosion of the metallic parts, that is to say because of the formation of metal oxides, this desired porosity is partly or completely lost so that the brake lining loses its original properties due to corrosion. In this case alkali phosphates can prevent corrosion inside the brake linings caused by water and water-containing salt.

It was further found that different water-soluble corrosion agents such as sodium molybdate, known as a cooling water additive, are not as effective as alkali phosphates.

3

The following example will explain the invention.

Example

(A) Preparation of an Asbestos-Free Brake Lining Without Anti-Corrosive Agent

An asbestos-free brake lining is prepared in the form of a first specimen having the following composition:

| Components | Amount Weight % |
|---|---|
| Phenolic resin (molecular weight about 14,000) | 12.0 |
| Iron chips | 57.0 |
| Copper chips | 9.0 |
| Lead dust | 3.0 |
| Zinc dust | 1.0 |
| Mica dust | 11.0 |
| Solid lubricant combination of Example 1 of German patent 35 13 031 comprising 50% graphite/30% zinc sulphide 10% antimony sulphide/10% calcium phosphate $Ca_2P_2O_7$ | 7.0 |
| Total | 100.0 |

This specimen was subjected to the above-mentioned anti-corrosive test of delivery specification TL-VW 110 1985. The test arrangement applied for this purpose is as follows:
1. The braking surface of the drums was cleaned with trichloroethylene with a dry, clean cloth.
2. Forcing the shoes (the lining is only riveted with centre rivets) with a device onto the braking surface of the brake drum and screwing in the adjustment screw with ten Nm.
3. Storage for 16 hours at +50°C and 100% relative humidity.
4. Allowing it to dry for 48 hours at room temperature.
5. Releasing the brake shoes with simultaneous measurement of the release moment of the given lining.
In this test there turns out to be a release moment of 10 to 20 Nm for the above specimen.

(B) Preparation of an Asbestos-Free Brake Lining With Anti-Corrosive Agent

An asbestos-free brake lining is prepared in the manner described above under (A) in the form of a second friction specimen containing an anti-corrosive agent. For this purpose a composition was used as in (A) with the only difference being that there is additionally about 1.5 weight %, with respect to the total amount of composition (A), of trisodium phosphate present which is added with the solid lubricant combination as premixture. Consequently trisodium phosphate is present in the finished brake lining in an amount of 1.48 weight %.

The testing carried out analogously to (A) of the specimen obtained according to the invention gives a release moment of 1 to 5 Nm.

Brake linings which are to be considered satisfactory give a release moment equal to, or less than, 10 Nm (1 mkp) in the above test method. At the same time they are not allowed to have a disruptive corroding effect and after the experiment they cannot show any mechanical defects.

These conditions are met by the specimens prepared according to Example (B) whereas this is not the case for the (A) specimens.

4

**Claims**

1.  The use of an alkali phosphate as anti-corrosive agent in friction linings or in solid lubricant combinations which are used in friction linings.

2.  The use according to Claim 1 characterised by using a trialkali phosphate as alkali phosphate.

3.  The use according to either one of the preceding claims wherein the alkali phosphate is trisodium phosphate.

4.  The use according to Claims 1, 2 or 3 characterised by the amount of alkali phosphate in the friction linings being 0.1 to 6 weight %, preferably 0.5 to 3 weight % and especially 1 to 2 weight %.

5.  The use according to Claims 1, 2 or 3 characterised by the amount of alkali phosphate in solid lubricant combinations used in friction linings being 5 to 50 weight %, preferably 15 to 35 weight % and especially 20 to 30 weight %.

**Patentansprüche**

1.  Verwendung eines Alkaliphosphats als Korrosionsschutzmittel in Reibbelägen oder in Festschmierstoffkombinationen, die in Reibbelägen verwendet werden.

2.  Verwendung nach Anspruch 1, dadurch gekennzeichnet, dass als Alkaliphosphat ein Trialkaliphosphat eingesetzt wird.

3.  Verwendung nach einem der vorhergehenden Ansprüche, dadurch gekennzeichnet, dass als Alkaliphosphat Trinatriumphosphat verwendet wird.

4.  Verwendung nach Anspruch 1, 2 oder 3, dadurch gekennzeichnet, dass die Menge an Alkaliphosphat in Reibbelägen 0,1 bis 6 Gewichtsprozent, vorzugsweise 0,5 bis 3 Gewichtsprozent und insbesondere 1 bis 2 Gewichtsprozent, beträgt.

5.  Verwendung nach Anspruch 1, 2 oder 3, dadurch gekennzeichnet, dass die Menge an Alkaliphosphat in Festschmierstoffkombinationen, die in Reibbelägen verwendet werden, 5 bis 50 Gewichtsprozent, vorzugsweise 15 bis 35 Gewichtsprozent, und insbesondere 20 bis 30 Gewichtsprozent, beträgt.

**Revendications**

1.  L'utilisation d'un phosphate alcalin comme agent anti-corrosion dans des garnitures de friction ou dans des combinaisons à lubrifiant solide qui sont utilisées dans des garnitures de friction.

2.  L'utilisation selon la revendication 1, caractérisée par l'utilisation d'un phosphate trialcalin comme phosphate alcalin.

3.  L'utilisation selon l'une ou l'autre des revendications précédentes, dans laquelle le phosphate alcalin est du phosphate trisodique.

4.  L'utilisation selon les revendications 1, 2 ou 3, caractérisée en ce que la quantité de phosphate alcalin dans les garnitures de friction représente 0,1 à 6 pour cent en poids, de préférence 0,5 à 3 pour cent en poids, et particulièrement 1 à 2 pour cent en poids.

5.  L'utilisation selon les revendications 1, 2 ou 3, caractérisée en ce que la quantité de phosphate alcalin dans les combinaisons à lubrifiant solide utilisées dans les garnitures de friction représente 5 à 50 pour cent en poids, de préférence 15 à 35 pour cent en poids, et particulièrement 20 à 30 pour cent en poids.